Europäisches Patentamt

(19) European Patent Office

Office européen des brevets

(11) Veröffentlichungsnummer: **0 289 653**
**B1**

(12) **EUROPÄISCHE PATENTSCHRIFT**

(45) Veröffentlichungstag der Patentschrift: **23.01.91**

(51) Int. Cl.⁵: **B 67 D 5/06**, F 16 L 37/06

(21) Anmeldenummer: **87115404.3**

(22) Anmeldetag: **21.10.87**

(54) **Vorrichtung zur Abdichtung des Spaltes zwischen einer Behälteröffnung und einem relativ beweglichen Versorgungsrohr.**

(30) Priorität: **06.05.87 DE 3714982**

(43) Veröffentlichungstag der Anmeldung:
**09.11.88 Patentblatt 88/45**

(45) Bekanntmachung des Hinweises auf die
Patenterteilung:
**23.01.91 Patentblatt 91/04**

(84) Benannte Vertragsstaaten:
**AT BE CH DE FR GB IT LI NL SE**

(56) Entgegenhaltungen:
**EP-A-0 018 464**
**GB-A- 917 338**
**GB-A-1 365 458**
**GB-A-1 536 683**

(73) Patentinhaber: **Firma Carl Freudenberg
Höhnerweg 2-4
D-6940 Weinheim/Bergstrasse (DE)**

(72) Erfinder: **Neuthard, Erich
Hüttenfelder Strasse 16
D-6944 Hemsbach (DE)**
Erfinder: **Steinert, Klaus-Albrecht
Uhlandstrasse 6
D-6149 Rimbach (DE)**

Courier Press, Leamington Spa, England.

**Beschreibung**

Die Erfindung betrifft eine Vorrichtung nach dem Oberbegriff von Anspruch 1.

Eine solche Vorrichtung ist aus der GB-PS 13 65 458 bekannt. Sie dient zur Abdichtung der Beschickungsöffnung einer Kugelmühle und ist mit dem Gehäuse derselben fest verbunden. Ihre Verwendung an wechselnden Behältern und insbesondere an Transportbehältern ist daher umständlich und nicht ohne weiteres möglich.

Die für das Befüllen und Entleeren von Transportbehältern vorgesehenen Öffnungen können sich hinsichtlich der Form und Größe erheblich voneinander unterscheiden. Der flüssigkeitsdichte Anschluß von Versorgungsrohren ist bereits aus diesem Grunde äußerst problematisch. Er wird weiter dadurch erschwert, daß zumindest ein Teil der vorhandenen Öffnungen weder mit einem Anschlußgewinde noch mit anderen Anschlußelementen versehen ist und während des Ladevorganges relativ zu dem Versorgungsrohr eine Lageveränderung erfahren kann. Das ist infolge der sich ändernden Belastung allerdings regelmäßig der Fall bei den nachgiebig gelagerten Transportbehältern von Straßen-, Eisenbahnfahrzeugen oder Schiffen.

Des weiteren besteht die Notwendigkeit, daß beim Befüllen von Behältern in dem zunächst noch vorhandenen Hohlraum enthaltene Luftvolumen kontinuierlich während der Durchführung des Füllvorganges zu entfernen. Dabei ergibt sich das Problem, daß dieses Luftvolumen zumeist durch Bestandteile des Füllgutes kontaminiert ist und daher ungereinigt nicht entweichen darf. Eine Absaugung ist daher wünschenswert, läßt sich aber mit den zur Verfügung stehenden Mitteln nicht in praxisgerechter Weise durchführen.

Der Erfindung liegt die Aufgabe zugrunde, eine Vorrichtung zur problemlosen Beschickung von Behältern zu entwickeln, die bei guter Abdichtung des Spaltes zwischen dem Versorgungsrohr und der Behälteröffnung und einer guten Relativbeweglichkeit zwischen beiden die Absaugung oder das Einpressen von Sekundärstoffen während des Beschickungsvorganges erlaubt.

Diese Aufgabe wird erfindungsgemäß bei einer Vorrichtung nach dem Oberbegriff von Anspruch 1 dadurch gelöst, daß die Ringdichtung an einem Zwischenrohr befestigt ist und durch dieses in eine nach außen weisende, erste Teildichtung und eine nach innen weisende, zweite Teildichtung unterteilt ist, daß die zweite Teildichtung in einem Abstand oberhalb der Öffnung und der ersten Teildichtung angeordnet ist und daß das Zwischenrohr einen Innenraum umschließt, der in dem Bereich zwischen der ersten und der zweiten Teildichtung von wenigstens einer seine Wandung quer durchdringenden Hilfsöffnung von außen zugänglich ist.

Bei der erfindungsgemäßen Vorrichtung ist die Ringdichtung durch das Zwischenrohr in radialer Richtung in zwei Einzeldichtungen unterteilt, was es gestattet, besonders große Maß- und Formdifferenzen zwischen der Öffnung des Behälters und dem Versorgungsrohr zu überbrücken. Zugleich wird eine ausgezeichnete Relativbeweglichkeit zwischen beiden erreicht, die sich sowohl auf Relativverlagerungen in axialer und radialer Richtung als auch auf Verkantungserscheinungen bezieht. Letztere können sich beispielsweise beim Beladen von Schiffen ergeben, bei denen die in Bewegungsrichtung hintereinander angeordneten Tankbehälter zeitlich aufeinander folgend beschickt werden.

Die erfindungsgemäße Vorrichtung weist wenigstens eine, die Wandung des Zwischenrohres seitlich durchbrechende Hilfsöffnung auf, durch die der noch oder bereits vorhandene Freiraum des Behälters während des Beschickungsvorganges zugänglich ist. Zweckmäßigerweise ist die Hilfsöffnung mit einem Anschlußstutzen für den Anschluß einer Absaug- und/oder Druckleitung versehen. In dem Freiraum läßt sich dadurch wahlweise ein Unterdruck oder Überdruck erzeugen, was den Beschickungsvorgang als solchen beschleunigt und es außerdem gestattet, freigesetzte Dämpfe oder Flugstaub schadlos zu entfernen.

An der Innenseite des Zwischenrohres kann unterhalb der Hilfsöffnung eine weitere, an das Versorgungsrohr anpreßbare, dritte Teildichtung vorgesehen werden. Die Verwendung eines Absperrventils in der Hilfsöffnung zur Unterbrechung der Verbindung zwischen der Hilfsöffnung und dem Freiraum kann in diesem Falle unterbleiben.

Nach einer anderen Ausgestaltung ist es vorgesehen, daß wenigstens eine der Teildichtungen auf der von dem Zwischenrohr abgewandten Seite mit wenigstens einer sich in Umfangsrichtung erstreckenden Dichtlippe versehen ist. Die Erzielung einer guten Abdichtung zwischen einer jeden Teildichtung und dem angrenzenden Teil, nämlich einerseits dem Versorgungsrohr und andererseits der Behälteröffnung wird hierdurch erleichtert. Zweckmäßig gelangt eine größere Anzahl entsprechender Dichtlippen zur Anwendung, die in geringem axialen Abstand voneinander angeordnet sind und gemeinsam mit der abgedichteten Fläche eine Art Labyrint umschließen.

Die Teildichtungen bestehen aus einem möglichst hochgradig flexiblen Material, um zu erreichen, daß sie sich in feinste Unregelmäßigkeiten der abzudichtenden Fläche einzuschmiegen vermögen.

Für ihre Herstellung können elastische Folien verwendet werden, beispielsweise solche aus Gummi, was die für das Zusammenfügen der einzelnen Teile erforderliche Volumenreduzierung durch einfache Druckentlastung des Innenraumes ermöglicht. Unelastische flexible Materialien, beispielsweise gewebearmierte Gummifolien haben eine bessere mechanische Widerstandsfähigkeit. Die für das Zusammenfügen der einzelnen Teile der erfindungsgemäßen Vorrichtung erforderliche Volumenverkleinerung kann in diesem Falle das Anlegen von Vakuum an den Innenraum erfordern und damit eine gewisse Vergrößerung des für die Betriebsbereitschaft erforderlichen Aufwandes. Durch eine reibungsvermindernde Ausrüstung der Oberfläche mit PTFE oder ähnlichen Substanzen läßt sich die Relativbeweglichkeit in bezug auf die beweglich abgedichteten Flächen weiter verbessern.

Die schnelle Inbetriebnahme und Außerbetriebsetzung der erfindungsgemäßen Vorrichtung kann es erfordern, das Versorgungsrohr und das Zwischenrohr sehr schnell in die Öffnung des Behälters einzuführen bzw. daraus zu entfernen. Um hierbei Beschädigungen der Teildichtungen zu verhindern hat es sich als vorteilhaft bewährt, wenn diese in nichtaufgeblähtem Zustand in ringförmigen Eintiefungen des Zwischenrohres versenkbar sind. Die entstehenden Belastungen werden in diesem Falle ausschließlich von dem Zwischenrohr aufgefangen, das aus einem metallischen Werkstoff erzeugt und dementsprechend widerstandsfähig ist.

In Hinblick auf die Erzielung einer ausreichend präzisen gegenseitigen Zuordnung insbesondere zwischen der ersten Teildichtung und der Öffnung des Behälters hat es sich als vorteilhaft bewährt, wenn das Zwischenrohr mit einer Stützvorrichtung versehen und durch die Stützvorrichtung auf der die Öffnung oberseits umschließenden Stützfläche abstützbar ist.

Eine solche Stützvorrichtung kann aus einem einstückigen Ringvorsprung der Zwischenrohres gebildet sein und erübrigt einen besonderen Justierungsaufwand während des Einführens des Zwischenrohres in die Öffnung. Das Zwischenrohr kann durch ein Schwenklager gehalten werden, was es ermöglicht, es nach der Entnahme des Versorgungsrohres seitlich auszuschwenken und außer Betrieb zu setzen. Hierdurch besteht die Möglichkeit, gegebenenfalls ein anderes Zwischenrohr mit unbeschädigten Teildichtungen in Betrieb zu nehmen, wenn eine Teildichtung des ersten Zwischenrohres eine Beschädigung erfahren hat. Des weiteren besteht die Möglichkeit, ein Zwischenrohr eines abweichenden Durchmessers einzuschwenken für den Fall, daß ein Behälter mit einer Öffnung extrem abweichenden Durchmessers zu beschikken ist. Auch in diesen Fällen braucht insofern keine nennenswerte Betriebsunterbrechung in Kauf genommen werden.

Im Regelfalle ist es bei der erfindungsgemäßen Vorrichtung ausreichend, wenn die Teildichtungen gemeinsam aufblähbar und/oder evakuierbar sind. Die Verwendung von Ausführungen, bei denen die Teildichtungen unabhängig voneinander aufblähbar und/oder evakuierbar sind, kann sich in Sonderfällen empfehlen.

Der wesentliche Vorteil der erfindungsgemäßen Vorrichtung besteht darin, daß es diese erlaubt, eine schnell herzustellende und schnell lösbare, absolut dichte Verbindung zwischen den vorhandenen Versorgungsrohren und den Öffnungen von Behältern zu erzeugen, wobei die Möglichkeit besteht, den noch oder bereits vorhandenen Freiraum in denselben während des Beschickungsvorganges wahlweise mit einem Überdruck oder einem Unterdruck zu beaufschlagen. Hierdurch ist es möglich, den Beschickungsvorgang als solchen zu beschleunigen und zugleich Umweltbelastungen zu vermeiden. Eine Nachrüstung vorhandener Beschickungsanlagen mit der erfindungsgemäßen Vorrichtung ist leicht möglich und kann auf der Grundlage einer Modulbauweise erfolgen.

Die Erfindung wird nachfolgend anhand der als Anlage beigefügten Zeichnung weiter erläutert. Es zeigen.

Figuren 1 bis 3 die Verwendung der erfindungsgemäßen Vorrichtung bei einer Betankungsstation für Kesselwagen

Figuren 4 und 5 die Verwendung der erfindungsgemäßen Vorrichtung bei einer Beladestation für Tankkraftwagen.

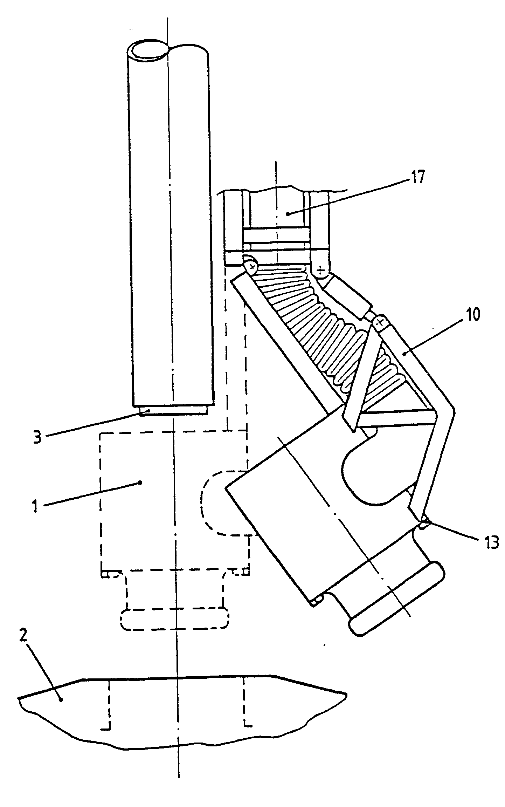

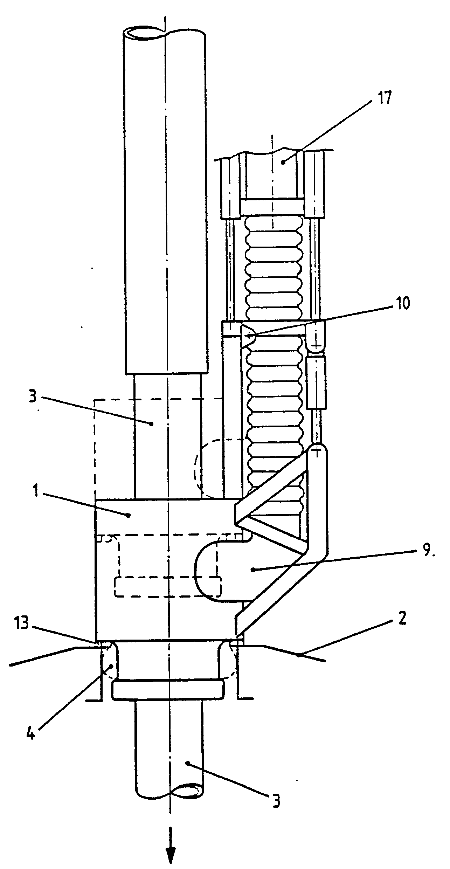

Bei der in Figur 1 gezeigten Darstellung ist der Behälter 2 des Kesselwagens nur schematisch angedeutet. Er enthält im oberen Bereich eine Öffnung, in welcher das Versorgungsrohr 3 senkrecht eintauchbar ist und gewöhnlich bis zum Boden durchgeführt wird. Es ist in der üblichen Weise an einem Schwenkarm aufgehängt, der zugleich das Traggerüst für die erfindungsgemäße Vorrichtung bildet. Dieses ist derart ausschwenkbar mit dem Traggerüst verbunden, daß es in der dargestellten Weise völlig aus dem Bereich der Führung des Versorgungsrohres 3 herausschwenkbar ist. Der Austausch bei einer eventuellen Beschädigung wird hierdurch erleichtert. Figur 2 zeigt die Vorrichtung gemäß Figur 1 unter normalen Betriebsbedingungen. Das Zwischenrohr 1 ist unterseits mit einer Stützvorrichtung 13 versehen und soweit in Richtung der Öffnung des Behälters 2 abgesenkt worden, daß sich die Stützvorrichtung 13 auf die die Öffnung oberseits umschließende Stützfläche auflegt. Zwischen der ersten Teildichtung 4 und der die Öffnung innenseitig begrenzenden Fläche ergibt sich so eine ohne weiteres akzeptable, gegenseitige Zuordnung.

Zur Herstellung der Betriebsbereitschaft wird anschließend das Versorgungsrohr 3 durch das Zwischenrohr hindurchgeführt und bis auf den Boden des zu befüllenden oder zu entleerenden Behälters 2 abgesenkt.

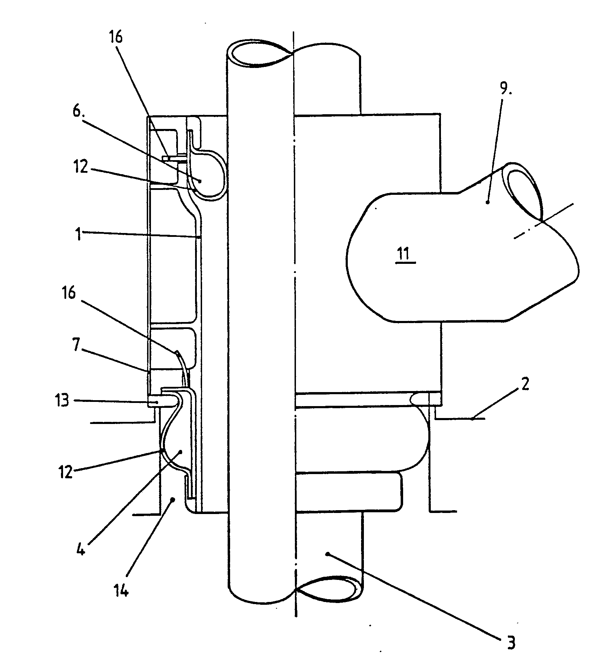

Die erste und die zweite Teildichtung 4, 6 werden anschließend mit einem unter Druck stehenden Medium aufgebläht, zweckmäßig mit Druckluft. Sie legen sich dadurch flüssigkeits- und gasdicht einerseits an die Innenwandung der Öffnung und andererseits an die Oberfläche des Versorgungsrohres 3 an. Die Einzelheiten können aus Figur 3 entnommen werden.

Die erste und die zweite Teildichtung (4, 6) sind jeweils in einer ringförmigen Eintiefung des Zwischenrohres 1 angeordnet. Diese sind hierdurch in unaufgeblähtem Zustand in guter Weise vor Beschädigungen geschützt.

Die erste Teildichtung und die zweite Teildichtung (4, 6) bestehen jeweils aus einer gewebearmierten Gummifolie. Diese zeichnet sich durch eine ausgezeichnete Flexibilität aus, was es erlaubt, sich während des Beladevorganges ergebende Relativverlagerungen des Behälters 2 in bezug auf das Förderungsrohr 3 in ausgezeichneter Weise auszugleichen.

Zur Erzeugung alternativ eines Über- oder eines Unterdruckes in den beiden Teildichtungen (4, 6) dienen die Anschlußleitungen 16. Sie ermöglichen die für das Einführen des Zwischenrohres in die Öffnung sowie des Versorgungsrohres 3 in das Zwischenrohr 1 erforderliche Volumenverkleinerung der ersten und der zweiten Teildichtung 4, 6 in Richtung der Wandung des Zwischenrohres.

Die Wandung des Zwischenrohres 1 ist zwischen der ersten und der zweiten Teildichtung 4, 6 seitlich durchbrochen von der Hilfsöffnung 11, welche durch den Anschlußstutzen 9 mit der Absaugleitung 17 verbunden ist. Während des Befüllvorganges in dem noch vorhandenen Freiraum des Behälters 2 vorhandene Dämpfe können hierdurch abgesogen und einer nicht dargestellten Reinigungsanlage zugeführt werden.

Umgekehrt ist bei einer Verwendung der Vorrichtung zur Entladung von Behältern jedoch gegebenenfalls auch die Einspeisung eines unter Druck stehenden Strömungsmittels über den Anschlußstutzen 9 über den Freiraum des Behälters möglich. Die Durchführung des Entladevorganges läßt sich hierdurch beschleunigen.

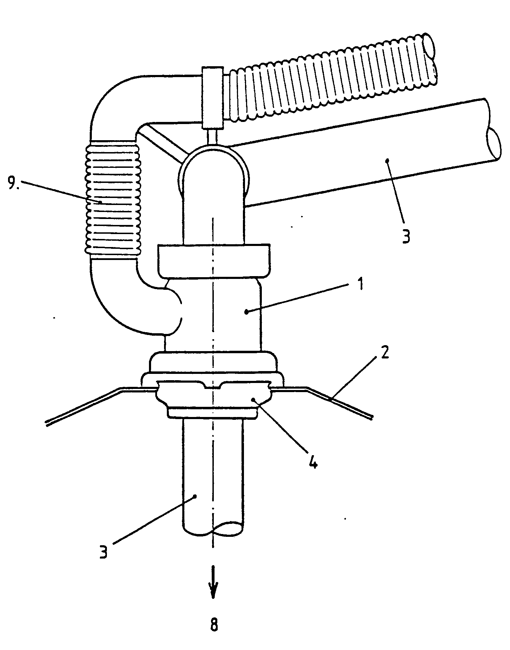

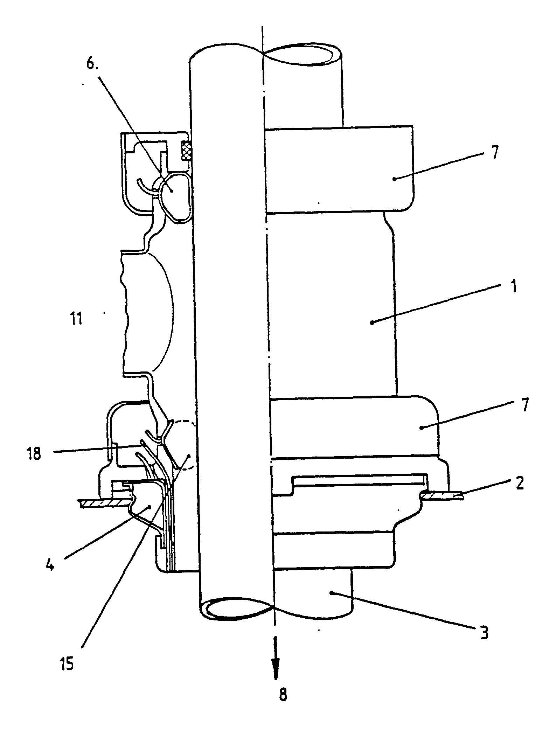

Figur 4 zeigt eine Ausführung der erfindungsgemäßen Vorrichtung in funktionsmäßiger Zusammenfassung mit einer Befüllanlage für Tankkraftwagen. Das Versorgungsrohr 3 dient in diesem Falle zugleich der mechanischen Abstützung des Zwischenrohres 1. Details desselben können der halbgeschnittenen Darstellung gemäß Figur 5 entnommen werden. Ausbildung und Anordnung der ersten und der zweiten Teildichtung 4, 6 sowie der Stützvorrichtung 13 entsprechen den vorstehenden Ausführungen. Zusätzlich ist eine dritte Teildichtung 15 vorhanden, was es gestattet, die Strömungsverbindung zwischen dem noch vorhandenen Freiraum des Behälters 2 und der Hilfsöffnung 11 des Zwischenrohres 1 durch Aufblähung zu verschließen. Die Leitung IB ist eine Kontrollleitung. Sie dient der Ermittlung des bereits erreichten Füllungsgrades.

## Patentansprüche

1. Vorrichtung zur Abdichtung des Spaltes zwischen der Öffnung eines Behälters und einem die Öffnung beweglich durchdringenden Versorgungsrohr, umfassend eine aufblähbare Ringdichtung, die in den Spalt einbringbar und durch Einspeisung eines druckbeaufschlagten Mediums an die den Spalt in radialer Richtung begrenzenden Flächen anpreßbar ist, dadurch gekennzeichnet, daß die Ringdichtung an einem Zwischenrohr (1) befestigt is. und durch dieses in eine nach außen weisende, erste Teildichtung (4) und eine nach innen weisende, zweite Teildichtung (6) unterteilt ist, daß die zweite Teildichtung (6) in einem Abstand oberhalb der Öffnung und der ersten Teildichtung (4) angeordnet ist und daß das Zwischenrohr (1) in dem Bereich zwischen der ersten und der zweiten Teildichtung (4, 6) von wenigstens einer Hilfsöffnung (11) durchdrungen ist.

2. Vorrichtung nach Anspruch 1, dadurch gekennzeichnet, daß an dem Zwischenrohr (1) innenseitig und unterhalb der Hilfsöffnung (11) eine an das Versorgungsrohr (3) anpreßbare, dritte Teildichtung (15) vorgesehen ist.

3. Vorrichtung nach Anspruch 1 bis 2, dadurch gekennzeichnet, daß wenigstens eine der Teildichtungen (4, 6, 15) auf der von dem Zwischenrohr (1) abgewandten Seite mit wenigstens einer sich in Umfangsrichtung erstreckenden Dichtlippe (15) versehen ist.

4. Vorrichtung nach Anspruch 1 bis 3, dadurch gekennzeichnet, daß wenigstens eine der Teildichtungen (4, 6, 15) in nicht aufgeblähtem Zustand in einer ringförmigen Eintiefung des Zwischenrohres (1) versenkbar ist.

5. Vorrichtung nach Anspruch 1 bis 4, dadurch gekennzeichnet, daß das Zwischenrohr (1) mit einer Stützvorrichtung (13) versehen und durch die Stützvorrichtung (13) auf der die Öffnung (14) oberseits umschließenden Stützfläche abstützbar ist.

6. Vorrichtung nach Anspruch 5, dadurch gekennzeichnet, daß die Stützvorrichtung (13) durch einen einstückigen Ringvorsprung des Zwischenrohres (1) gebildet ist.

7. Vorrichtung nach Anspruch 1 bis 6, dadurch gekennzeichnet, daß das Zwischenrohr (1) in einem Schwenklager (10) gelagert und nach Entfernung des Versorgungsrohres (3) seitlich ausschwenkbar ist.

8. Vorrichtung nach Anspruch 1 bis 7, dadurch gekennzeichnet, daß die Hilfsöffnung (11) mit einem Anschlußstück (9) für eine Absaug- und/ oder Druckleitung versehen ist.

9. Vorrichtung nach Anspruch 1 bis B, dadurch gekennzeichnet, daß die Teildichtungen (4, 6, 15) unabhängig voneinander aufblähbar und/oder evekuierbar sind.

10. Vorrichtung nach Anspruch 1 bis 9, dadurch gekennzeichnet, daß die Teildichtungen (4, 6, 15) aus einer gewebearmierten Gummifolie bestehen.

## Revendications

1. Dispositif pour rendre étanche le jeu entre l'orifice d'un récipient et une tubulure d'alimentation traversant cet orifice de manière mobile, comprenant un joint annulaire gonflable qui peut être placé dans le , i t être pressé contre les surfaces délimitant le , u en direction radiale par injection d'un fluide sous pression, caractérisé en ce que le joint annulaire est fixé à un tube intermédiaire (1) et est subdivisé par celui-ci en un premier joint partiel (4) tourné vers l'extérieur et un deuxième joint partiel (6) tourné vers l'intérieur, que le deuxième joint partiel (6) est disposé à une certaine distance au-dessus de l'orifice et du premier joint partiel (4) et que le tube intermédiaire (1) est traversé par au moins un orifice auxiliaire (11) dans la zone entre le premier et le deuxième joint partiel (4, 6).

2. Dispositif selon la revendication 1, caractérisé en ce qu'un troisième joint partiel (15) pouvant être comprimé contre la tubulure d'alimentation (3) est prévu sur le tube intermédiaire (1), intérieurement et en dessous de l'orifice auxiliaire (11).

3. Dispositif selon les revendications 1 et 2, caractérisé en ce qu'au moins l'un des joints partiels (4, 6, 15) est pourvu sur le côté opposé au tube intermédiaire (1) d'au moins une lèvre d'étanchéité (15) s'étendant en direction de la périphérie.

4. Dispositif selon les revendications 1 à 3, caractérisé en ce qu'au moins l'un des joints partiels (4, 6, 15) peut être enfoncé à l'état non gonflé dans un renfoncement annulaire du tube intermédiaire (1).

5. Dispositif selon les revendications 1 à 4, caractérisé en ce que le tube intermédiaire (1) est pourvu d'un dispositif de support (13) et peut prendre appui, par l'intermédiaire du dispositif de support (13), sur la surface d'appui entourant l'orifice (14) Par le dessus.

6. Dispositif selon la revendication 5, caractérisé en ce que le dispositif de support (13) est constitué par une saillie annulaire d'une pièce du tube intermédiaire (1).

7. Dispositif selon les revendications 1 à 6, caractérisé en ce que le tube intermédiaire (1) est supporté dans un palier pivotant (10) et peut être rabattu latéralement après l'enlèvement de la tubulure d'alimentation (3).

8. Dispositif selon les revendications 1 à 7, caractérisé en ce que l'orifice auxiliaire (11) est pourvu d'une pièce de raccordement (9) pour une conduite d'aspiration et/ou de pression.

9. Dispositif selon les revendications 1 à 8, caractérisé en ce que les joints partiels (4, 6, 15) peuvent être gonflés et mis sous vide indépendamment les uns des autres.

10. Dispositif selon les revendications 1 à 9, caractérisé en ce que les joints partiels (4, 6, 15) sont réalisés en feuille de caoutchouc armée par un tissu.

**Claims**

1. A device for sealing the space between the opening of a container and a feeding pipe movably penetrating the opening, comprising an inflatable ring seal which can be introduced into the space and pressed against the surfaces bounding the space in the radial direction by feeding in a pressurized medium, characterized in that the ring seal is attached to an intermediate pipe (1) and is divided by the latter into an outward-facing, first part-seal (4) and an inward-facing, second part-seal (6), in that the second part-seal (6) is arranged at a distance above the opening and the first part-seal (4) and in that, in the region between the first and the second part-seal (4, 6), the intermediate pipe (1) is penetrated by at least one auxiliary opening (11).

2. A device according to claim 1, characterized in that a third part-seal (15), which can be pressed against the feeding pipe (3), is provided on the intermediate pipe (1), on the inside and below the auxiliary opening (11).

3. A device according to either of claims 1 and 2, characterized in that at least one of the part-seals (4, 6, 15) is provided on the side facing away from the intermediate pipe (1) with at least one sealing lip (15) extending in the circumferential direction.

4. A device according to any of claims 1 to 3, characterized in that, in the uninflated condition, at least one of the part-seals (4, 6, 15) can be sunk in an annular recess of the intermediate pipe (1).

5. A device according to any of claims 1 to 4, characterized in that the intermediate pipe (1) is provided with a supporting device (13) and can be supported by the supporting device (13) on the supporting surface surrounding the opening (14) at the top.

6. A device according to claim 5, characterized in that the supporting device (13) is formed by an integral annular projection of the intermediate pipe (1).

7. A device according to any of claims 1 to 6, characterized in that the intermediate pipe (1) is mounted in a swivel bearing (10) and, after the removal of the feeding pipe (3), can be swivelled out laterally.

8. A device according to any of claims 1 to 7, characterized in that the auxiliary opening (11) is provided with a connection piece (9) for a suction and/or pressure line.

9. A device according to any of claims 1 to 8, characterized in that the part-seals (4, 6, 15) can be inflated and/or evacuated independently of each other.

10. A device according to any of claims 1 to 9, characterized in that the part-seals (4, 6, 15) comprise a fabric-reinforced rubber sheet.

9.

3

1

2

4

3

8